# DEMANDE DE BREVET EUROPEEN

(11) **EP 0 854 173 A1**
(43) Date de publication de la demande: **22.07.1998**
(21) Numéro de dépôt: 98400065.3
(22) Date de dépôt: 15.01.1998
(51) Int. Cl.: C08L 27/12, C08L 9/02, C08L 13/02

(54) **Compositions à base de polymère fluoré comprenant des motifs de fluorure de vinylidène et d'élastomère butadiene-acrylonitrile**

(30) Priorité: 17.01.1997 FR 9700478
(71) Demandeur: ELF ATOCHEM S.A., 92800 Puteaux, Hauts-de-Seine (FR)
(72) Inventeur: Betremieux, Isabelle, 27170 Beaumontel (FR); Dousson, Christian, 27300 Bernay (FR)

(57) **Abrégé**

La présente invention concerne des compositions comprenant au moins un polymère fluoré comprenant des motifs fluorure de vinylidène et au moins un caoutchouc nitrile.

Ces compositions présentent de bonnes propriétés mécaniques, thermomécaniques ainsi qu'une bonne résistance chimique et notamment une bonne imperméabilité aux hydrocarbures.

## Description

La présente invention concerne le domaine des polymères et plus particulièrement des compositions comprenant au moins un polymère fluoré comprenant des motifs dérivant du fluorure de vinylidène (VF2) et au moins un caoutchouc nitrile.

US 5 095 072 a décrit des alliages thermoplastiques de PVDF et de caoutchouc de type nitrile ou acrylate sous forme de gel. La gélification du caoutchouc est obtenue par addition de monomères multi-fonctionnels ou par polymérisation à haute température et non par vulcanisation. Le caoutchouc gélifié est ensuite mélangé avec le PVDF ; on constate que le caoutchouc gélifié est distribué de façon grossière et irrégulière dans le PVDF et que les alliages obtenus ne présentent aucune propriété en traction, flexion ou en résistance au choc, ce qui caractérise de manière générale les mélanges hétérogènes de polymères.

Dans EP 714 944 on a proposé des compositions thermoplastiques comprenant une matrice de polyfluorure de vinylidène (PVDF) dans laquelle sont dispersés des nodules de caoutchouc vulcanisé essentiellement non fluoré qui présentent des propriétés mécaniques améliorées par rapport aux alliages décrits dans US 5 095 072. Afin d'améliorer la résistance au choc multiaxial, EP 714 944 préconise d'ajouter un agent de compatibilisation choisi parmi les polyesters aliphatiques éventuellement greffés, le polyméthacrylate de méthyle (PMMA) éventuellement imidisé ou les polyoléfines greffées avec du méthacrylate de méthyle. Or ces agents de compatibilisation ont souvent des propriétés chimiques et mécaniques médiocres ce qui influe de manière néfaste sur les compositions dans lesquelles ils sont introduits.

Les compositions selon l'invention présentent simultanément de bonnes propriétés mécaniques, thermomécaniques ainsi qu'une bonne résistance chimique et notamment une bonne imperméabilité aux hydrocarbures et ne nécessitent pas d'agent de compatibilisation. Elles sont caractérisées en ce qu'elles comprennent un mélange constitué de 5 à 95 % en poids d'au moins un polymère thermoplastique fluoré et de 95 à 5 % en poids d'au moins un élastomère nitrile et en ce que le pourcentage global en acrylonitrile du ou des élastomères nitriles est supérieur ou égal à 30 %.

Les compositions selon l'invention sont en général thermoplastiques, c'est-à-dire qu'elles sont transformables par les technologies utilisées pour les thermoplastiques telles que l'extrusion ou le calandrage. Elles peuvent également présenter, selon la quantité d'élastomère(s) mis en oeuvre, un caractère élastomérique.

Dans la présente invention, on désigne par polymère fluoré des polymères possédant au moins 50 % en moles de restes de VF₂, On préfère les homopolymères de VF2 (PVDF) et/ou les copolymères comprenant des motifs dérivés de VF2 et d'hexafluoropropylène (HFP).

Par élastomère nitrile au sens de la présente invention, on entend les copolymères de butadiène et d'acrylonitrile, éventuellement partiellement ou totalement hydrogéné. Les compositions selon l'invention préférées sont celles qui contiennent au moins un élastomère nitrile contenant au moins 35 % en poids d'acrylonitrile.

Le ou les élastomères nitriles peuvent être réticulés ou non.

Les systèmes de vulcanisation utilisés sont bien connus de l'homme du métier et l'invention n'est pas limitée à un type particulier de système. On peut citer quatre types de systèmes de vulcanisation :
- Systèmes au soufre constitués de soufre associé aux accélérateurs usuels tels que les sels métalliques de dithiocarbamates (diméthyl dithiocarbamate de zinc, de tellure, etc.), les disulfures de thiurame (tétraméthyl disulfure de thiurame, etc.), les sulfénamides, etc.

Ces systèmes peuvent contenir également de l'oxyde de zinc associé à de l'acide stéarique.
- Systèmes donneurs de soufre dans lesquels la majorité du soufre utilisée pour les pontages, provient de molécules soufrées telles que les composés organosoufrés cités plus haut.
- Systèmes aux résines phénoliques constitués de résines formophénoliques difonctionnelles pouvant être halogénées associées à des accélérateurs tels que le chlorure stanneux, l'oxyde de zinc.
- Systèmes aux peroxydes. Ils permettent d'avoir un produit plus stable à la chaleur, blanc, pas jaune, comme dans le cas des systèmes donneurs de soufre. Tous les donneurs de radicaux libres peuvent être utilisés (peroxyde de dicumyle, etc.) en association avec l'oxyde de zinc et l'acide stéarique.

L'élastomère nitrile peut être fonctionnalisé par exemple par des radicaux acides carboxyliques, anhydrides, sels ou esters desdits acides carboxyliques, par des groupes époxydes, amino et/ou par des halogènes. Les caoutchoucs ci-dessus qui ne sont pas fonctionnalisés peuvent l'être par exemple par greffage de radicaux de façon connue ou par mélange avec des élastomères déjà fonctionnalisés tels que des élastomères acryliques ou des NBR carboxylés (X-NBR).

On peut ajouter aussi du caoutchouc déjà vulcanisé (par exemple par recyclage de matériau broyé). On ne sortirait pas du cadre de l'invention en utilisant un mélange d'élastomère contenant une faible proportion de caoutchoucs fluorés, par exemple jusqu'à 5 % en poids de la quantité d'élastomère nitrile.

Les compositions selon l'invention peuvent être modifiées pour certaines propriétés particulières (amélioration des propriétés mécaniques par exemple) par l'addition de charges telles que le noir de carbone, la silice, le kaolin, l'argile, le talc, la craie, etc. Ces charges peuvent être traitées en surface par des silanes, des polyéthylène glycols ou toute autre molécule de couplage. En général, le taux pondéral de charges est compris entre 5 et 100 pour 100 parties d'élastomère.

En outre, les compositions peuvent être assouplies par des plastifiants tels que les huiles minérales dérivées du pétrole, les esters de l'acide phtalique ou de l'acide sébacique, les plastifiants polymères liquides tels que le polybutadiène de faible masse éventuellement carboxylé, et d'autres plastifiants bien connus de l'homme du métier.

En général, ce sont les élastomères nitriles mis en oeuvre qui sont formulés, c'est-à-dire additivés de charges minérales, de plastifiant, et éventuellement d'un système de réticulation (système au soufre, système à base de peroxyde).

L'invention concerne aussi un procédé de préparation de ces compositions.

On peut préparer les compositions de l'invention en mélangeant :
(i) le ou les élastomère(s) nitrile(s) ayant été auparavant éventuellement formulé(s) avec une quantité suffisante d'agent de réticulation, avec des charges et avec des plastifiants
(ii) avec le ou les polymère(s) fluoré(s) à une température suffisante pour provoquer la fusion du ou les polymère(s) fluoré(s), et pendant une durée suffisante pour mélanger intimement le ou les élastomère(s) nitrile(s) avec le ou les polymère(s) fluoré(s).

Lorsque le ou les élastomères nitriles sont réticulés, on préfère procéder à la vulcanisation dynamique à une température supérieure à la température de fusion des thermoplastiques et inférieure à 300 °C ou mieux 250 °C de manière à éviter une dégradation des élastomères et autres additifs de la formulation. La durée de la vulcanisation dynamique sera de préférence suffisante pour atteindre au moins le t₉₀ de la formulation (durée pour atteindre 90 % de vulcanisation du ou des élastomères).

Le matériel utilisé pour effectuer cette opération peut être un malaxeur ou comalaxeur, un mélangeur interne ou bien une extrudeuse bivis.

On peut aussi introduire le ou les polymères fluorés, le ou les élastomères et les additifs prémélangés ensemble à l'état plastique sur un cylindre ou dans un malaxeur, le système de vulcanisation éventuel étant introduit en même temps (ou en différé quand les thermoplastiques sont à l'état fondu), puis augmenter la température à une température supérieure à la température de fusion des thermoplastiques pour procéder à la vulcanisation dynamique.

Les combinaisons d'agent de vulcanisation sont telles qu'elles doivent permettre une réticulation du ou des élastomères.

La durée du mélange pour préparer les compositions de l'invention peut être comprise entre 2 et 20 minutes et avantageusement entre 2 et 10 minutes.

Les compositions de l'invention se présentent sous forme d'une matrice de polymère(s) fluoré(s) contenant des nodules d'élastomère(s) nitrile(s) lorsque la quantité d'élastomère(s) nitrile(s) est inférieure à 70 % en poids de la composition totale, et sous forme d'une matrice en élastomère(s) nitrile(s) contenant des nodules de polymère(s) fluoré(s) lorsque la quantité d'élastomère(s) nitrile(s) est supérieure à 70 % en poids de la composition totale.

Lorsque la quantité d'élastomère(s) nitrile(s) est inférieure à 70 % en poids, les compositions de l'invention sont thermoplastiques ; elles restent stables lors de transformations ultérieures et on ne constate ni migration ni coalescence de nodules lors de ces étapes de transformation. Lorsque la quantité d'élastomère(s) nitrile(s) est supérieure à 70 % en poids de la composition totale, les compositions de l'invention ont un comportement élastomérique. Au voisinage de cette valeur, les compositions peuvent présenter simultanément un comportement thermoplastique et un comportement élastomérique ; dans ce cas elles font partie des élastomères thermoplastiques (TPE).

Les compositions de l'invention présentent une résistance à la traction à la rupture supérieure à 12 MPa et un allongement à la rupture supérieur à 200 % mesurés selon la norme ISO 527 avec des éprouvettes de type 5A.

Les compositions de l'invention présentent également une très bonne résistance à la déchirure i.e supérieure à 50 N/mm mesurée selon la norme ASTM D624 sur des éprouvettes de type C (vitesse de traction 200 mm/min).

En sus, les compositions selon l'invention présentent une imperméabilité aux hydrocarbures accrue par rapport à des compositions à base des mêmes élastomères nitriles mais ne contenant pas de polymère fluoré.

La présente invention concerne aussi les objets fabriqués avec ces compositions, et notamment des matériaux composites.

En particulier, les compositions selon l'invention sont particulièrement utiles pour la réalisation de matériaux multicouches tels que tubes, films, gaines, stratifiés dont au moins une couche comprend une des compositions selon l'invention.

Ces matériaux muticouches peuvent être fabriqués par coextrusion et/ou en mettant en oeuvre des techniques de recouvrement.

### Exemples

Sauf indication contraire, les proportions indiquées sont exprimées en poids.La viscosité Mooney des élastomères est mesurée selon la norme ASTM D1646. L'indice de fluidité (Ml) des résines thermoplastiques est mesuré selon la norme ASTM D1238.

Les caoutchoucs nitriles NBR sont des copolymères butadiène-acrylonitrile
- contenant 45 % en poids d'acrylonitrile et de viscosité Mooney égale à 60 pour le CHEMIGUM® N206 commercialisé par Goodyear,
- contenant 45 % en poids d'acrylonitrile et de viscosité Mooney égale à 50 pour le PERBUNAN® 4550 commercialisé par Bayer,
- contenant 28 % en poids d'acrylonitrile et de viscosité Mooney égale à 50 pour le PERBUNAN® 2807 NS commercialisé par Bayer.

Le polymère fluoré TP1 est un homopolymère de fluorure de vinylidène de Ml compris entre 20 et 35 g/10 min mesuré à 232°C sous une charge de 3,8 kg.

Le polymère fluoré TP2 est un copolymère de fluorure de vinylidène et de 3 à 4 % en moles d'hexafluoropropylène de Ml compris entre 7 et 25 g/10 min mesuré à 232°C sous une charge de 3,8 kg.

### Exemples 1 à 4

Le NBR a été formulé dans un mélangeur à cylindres à des températures n'excédant pas 60°C selon les compositions suivantes comprenant :

| | | NBR1 | NBR2 | NBR3 | NBR4 |
|---|---|---|---|---|---|
| NBR | Perbunan® 4550 | | 30 | 50 | 100 |
| | Perbunan® 2807 NS | 100 | 70 | 50 | |
| Charge, silice | Ultrasil® VN3 | 30 | 30 | 30 | 30 |
| Agent de couplage | Polyvest® C70 | 4 | 4 | 4 | 4 |
| Pigment | TiO₂ | 5 | 5 | 5 | 5 |
| Agent de couplage | Si69 | 1 | 1 | 1 | 1 |
| Stabilisant antichaleur, diphénylamine | Naugard® 445 | 1 | 1 | 1 | 1 |
| Accélérateur,sulfénamide | MBS | 2 | 2 | 2 | 2 |
| Agent de vulcanisation | Soufre | 0,8 | 0,8 | 0,8 | 0,8 |
| Activateur,dithiomorpholine | DTDM | 1,5 | 1,5 | 1,5 | 1,5 |
| Retardateur,thiophthalimide | Santogard® PVI 50 | 4 | 4 | 4 | 4 |
| Oxide de zinc | ZnO | 5 | 5 | 5 | 5 |
| Acide stéarique | | 1 | 1 | 1 | 1 |
| Total | | 155,3 | 155,3 | 155,3 | 155,3 |

Ces formulations ont ensuite été mélangées au TP1 et vulcanisées dynamiquement dans un Plasti Corder® Brabender pendant 5 min environ à des températures comprises entre 170 et 220°C.

Les différentes compositions ont ensuite été moulées par compression à 200 °C sous forme de plaques dans lesquelles ont été découpées des éprouvettes pour la mesure des propriétés mécaniques suivantes :
- allongement et contrainte à la rupture mesurés selon la norme ISO 527 sur des éprouvettes de type 5A (vitesse de traction 200 mm/min).

Les résultats sont réunis dans le tableau 1.

**Tableau 1**

| Exemples | 1 | 2 | 3 | 4 |
|---|---|---|---|---|
| Composition (%) | | | | |
| NBR1 | 45 | | | |
| NBR2 | | 45 | | |
| NBR3 | | | 45 | |
| NBR4 | | | | 45 |
| TP1 | 55 | 55 | 55 | 55 |
| Contrainte à la rupture (MPa) | 14,8 | 17,8 | 19,7 | 25,0 |
| Allongement à la rupture (%) | 115 | 242 | 342 | 310 |

### Exemples 5 à 13

Le NBR a été formulé dans un mélangeur rapide à des températures proches de l'ambiante n'excédant pas 30°C selon la composition suivante en parts :

| | | |
|---|---|---|
| NBR | Chemigum® P 206* | 115 |
| Charge, silice | Ultrasil® VN 3 | 15 |
| Charge, kaolin | Kaolin 94MK01 | 20 |
| Agent de couplage | PEG 4000 | 4 |
| Pigment | TiO₂ | 5 |
| Agent de couplage | Si69 | 1 |
| Stabilisant, phénol | Wingstay® L | 1 |
| Stabilisant, phosphite | TNPP | 1 |
| Agent de vulcanisation | Soufre | 0,8 |
| Accélérateur, sulfénamide | MBS | 2 |
| Accélérateur, thiurame | TMTD | 0,5 |
| Activateur, dithiomorpholine | DTDM | 1,5 |
| Retardateur, thiophthalimide | Santogard® PVI 50 | 4 |
| Acide stéarique | | 1 |
| Activateur de vulcanisation | ZnO | 5 |
| Total | | 176,8 |
| Chemigum® P206* = Chemigum® N206 + agent anti-mottant (broyé et formulé) | | |

Cette formulation (NBR5), se présentant sous la forme d'une poudre de quelques centaines de pm a été mélangée à différents polymères fluorés dans différentes proportions et vulcanisée dynamiquement en extrudeuse ou en mélangeur interne à des températures supérieures à 180°C.

Les différentes compositions ont ensuite été moulées par compression à 200 °C sous forme de plaques dans lesquelles ont été découpées des éprouvettes pour la mesure des propriétés mécaniques suivantes :
- allongement et contrainte à la rupture mesurés selon la norme ISO 527 sur des éprouvettes de type 5A (vitesse de traction 200 mm/min)
- résistance à la déchirure mesurée selon la norme ASTM D624 sur des éprouvettes de type C (vitesse de traction 200 mm/min)
- dureté Shore D mesurée sous 5 s selon la norme ASTM D 2240
- DRC mesuré après 22 h à 70°C selon la norme ASTM D395 (méthode B).

Les résultats sont réunis dans le tableau 2.

**Tableau 2**

| Exemples | 5 | 6 | 7 | 8 | 9 | 10 | 11 | 12 | 13 |
|---|---|---|---|---|---|---|---|---|---|
| Composition (%) | | | | | | | | | |
| NBR5 | 70 | 50 | 40 | 60 | 62 | 50 | 60 | 60 | 50 |
| TP1 | 30 | 50 | 60 | 40 | 38 | 25 | 20 | | |
| TP2 | | | | | | 25 | 20 | 40 | 50 |
| Contrainte à la rupture (MPa) | 14,1 | 17,8 | 19,9 | 17,4 | 16,7 | 20,4 | 18,5 | 18,4 | 20,1 |
| Allongement à la rupture (%) | 232 | 238 | 195 | 275 | 272 | 375 | 327 | 346 | 439 |
| Résistance à la déchirure (N/mm) | 52,2 | 85,1 | 103,7 | 67,2 | 69,0 | 72,7 | 63,3 | 55,3 | 67 |
| Dureté Shore D | 34 | 42 | 48 | 39 | 38 | 38 | 38 | 31 | 33 |
| DRC | 38,5 | 62,0 | 70,5 | 51,5 | 50,0 | 55,5 | 43,8 | 40,3 | 48,5 |

### Exemples 14 à 18

Le NBR a été formulé dans un mélangeur à cylindres à des températures n'excédant pas 60°C selon les compositions suivantes comprenant :

| | | NBR6 | NBR7 | NBR8 | NBR9 | NBR10 |
|---|---|---|---|---|---|---|
| NBR | Perbunan® 4550 | 100 | 100 | 100 | 100 | 100 |
| Charge, silice | Ultrasil® VN3 | 30 | | | | |
| kaolin | Polestar® 200R | | 50 | | | |
| CaCO₃ | Polcarb® SB | | | 50 | | |
| Mg(OH)₂ | Magnifin® 10HT | | | | 50 | |
| | Noir FEF 550 | | | | | 50 |
| Agent de couplage | PEG 4000 | | 4 | 4 | 4 | 4 |
| | Polyvest C70 | 4 | | | | |
| | Si69 | 1 | | | | |
| Pigment | TiO₂ | 5 | | | | |
| Stabilisant antichaleur, diphénylamine | Naugard® 445 | 1 | 1 | 1 | 1 | 1 |
| Accélérateur,sulfénamide | MBS | 2 | 2 | 2 | 2 | 2 |
| Agent de vulcanisation | Soufre | 0,8 | 0,8 | 0,8 | 0,8 | 0,8 |
| Activateur,dithiomorpholine | DTDM | 1,5 | 1,5 | 1,5 | 1,5 | 1,5 |
| Accélérateur, thiurame | TMTD | | 0,5 | 0,5 | 0,5 | 0,5 |
| Retardateur,thiophthalimide | Santogard®PVI 50 | 4 | 4 | 4 | 4 | 4 |
| Oxyde de zinc | ZnO | 5 | 5 | 5 | 5 | 5 |
| Acide stéarique | | 1 | 1 | 1 | 1 | 1 |
| Total | | 155,3 | 169,8 | 169,8 | 169,8 | 169,8 |

Ces formulations ont ensuite été mélangées au TP1 et vulcanisées dynamiquement dans un Plasti Corder® Brabender pendant 5 min environ à des températures comprises entre 170 et 220°C.

On mesure la contrainte à la rupture et la résistance à la déchirure selon les méthodes utilisées pour les exemples 1 à 10.

Les résultats sont réunis dans le Tableau 3.

**Tableau 3**

| Exemples | 14 | 15 | 16 | 17 | 18 |
|---|---|---|---|---|---|
| Composition (%) | | | | | |
| NBR6 | 45 | | | | |
| NBR7 | | 45 | | | |
| NBR8 | | | 45 | | |
| NBR9 | | | | 45 | |
| NBR10 | | | | | 45 |
| TP1 | 55 | 55 | 55 | 55 | 55 |
| Contrainte à la rupture (MPa) | 23,0 | 17,0 | 18,5 | 18,7 | 24,5 |
| Résistance à la déchirure (N/mm) | 97,5 | 94,0 | 94,0 | 96,0 | 102,0 |

### Exemples 19 à 22

Différents taux de TP1 ont été mélangés au NBR Chemigum® P 206 dans un mélangeur Plasti Corder® Brabender à 200°C pendant environ 5 min. Les mélanges ont ensuite été repris sur cylindres afin d'introduire le système de réticulation (Perkadox® BC40) et vulcanisés sous forme de films d'environ 250 µm d'épaisseur par moulage compression à 170°C.

A partir de ces films, des mesures de perméabilité au carburant TF1, composé en volume de 10 % d'éthanol et de 90 % d'essence C (mélange équivolumique de toluène et d'isooctane) ont été réalisées selon le mode opératoire détaillé ci-dessous :
- mettre un volume précis (30 ml) d'essence TF1 dans une coupelle de mesure de 50 mm de diamètre et 25 mm de hauteur
- l'obturer à l'aide du film à tester,
- placer l'ensemble sous une hotte ventilée, régulée en température (20°C) et en humidité relative (50 %), en retournant la coupelle de façon à ce que le film soit en contact avec l'essence.
- peser la coupelle à des intervalles de temps réguliers.

L'augmentation de la variation de la masse en fonction du temps permet de déterminer le flux qui est exprimé en g/m²/24 h pour une épaisseur de film connue avec précision.

Les résultats sont réunis dans le Tableau 4.

**Tableau 4**

| Exemple | Témoin | 19 | 20 | 21 | 22 |
|---|---|---|---|---|---|
| Composition (%) | | | | | |
| NBR | 100 | 90 | 80 | 70 | 60 |
| TP1 | 0 | 10 | 20 | 30 | 40 |
| Epaisseur du film (µm) | 262 | 263 | 233 | 272 | 283 |
| Flux TF1 (g/m²/24h) | 2.227 | 1.692 | 1.129 | 593 | 341 |
| Flux TF1 (g/250µm/m²/24h) | 2.334 | 1.780 | 1.053 | 646 | 386 |

## Revendications

1. Compositions caractérisées en ce qu'elles comprennent un mélange constitué de 5 à 95 % en poids d'au moins un polymère thermoplastique fluoré et de 95 à 5 % en poids d'au moins un élastomère nitrile et en ce que le pourcentage global pondéral en acrylonitrile du ou des élastomères nitriles est supérieur ou égal à 30 %.

2. Compositions selon la revendication 1 caractérisées en ce qu'elles contiennent au moins un élastomère nitrile contenant au moins 35 % en poids d'acrylonitrile.

3. Compositions selon l'une des revendications 1 ou 2 caractérisées en ce qu'au moins un élastomère nitrile est réticulé.

4. Compositions selon l'une des revendications 1 à 3 caractérisées en ce qu'au moins un élastomère nitrile est fonctionnalisé et est de préférence un NBR carboxylé (X-NBR).

5. Compositions selon l'une des revendications 1 à 4 caractérisées en ce que le ou les polymères fluorés ont choisis parmi les homopolymères de VF2 et/ou les copolymères comprenant des motifs dérivés de VF2 et d'hexafluoropropylène (HFP).

6. Compositions selon l'une des revendications 1 à 5 caractérisées en ce qu'elles contiennent des modifiants et/ou charges et/ou plastifiants.

7. Compositions thermoplastiques selon l'une des revendications 1 à 6 caractérisées en ce qu'elles se présentent sous forme d'une matrice de polymère(s) fluoré(s) contenant des nodules d'élastomère(s) nitrile(s) et en ce que la quantité d'élastomère(s) nitrile(s) est inférieure à 70 % en poids de la composition totale.

8. Compositions élastomères selon l'une des revendications 1 à 6, caractérisées en ce qu'elles se présentent sous forme d'une matrice en élastomère(s) nitrile(s) contenant des nodules de polymère(s) fluoré(s) lorsque la quantité d'élastomère(s) nitrile(s) est supérieure à 70 % en poids de la composition totale.

9. Procédé de préparation des compositions selon l'une des revendications 1 à 8 dans lequel on mélange
(i) le ou les élastomère(s) nitrile(s) ayant été auparavant éventuellement formulé(s) avec une quantité suffisante d'agent de réticulation, avec des charges et avec des plastifiants
(ii) avec le ou les polymère(s) fluoré(s) à une température suffisante pour provoquer la fusion du ou les polymère(s) fluoré(s), et pendant une durée suffisante pour mélanger intimement le ou les élastomère(s) nitrile(s) avec le ou les polymère(s) fluoré(s).

10. Utilisation des compositions selon les revendications 1 à 8 pour la réalisation de matériaux multicouches tels que tubes, films, gaines, stratifiés dont au moins une couche comprend une des compositions selon l'invention.
